**Europäisches Patentamt**

**European Patent Office**

**Office européen des brevets**

(19)

(11) Veröffentlichungsnummer: **0 001 820**
**B1**

(12) # EUROPÄISCHE PATENTSCHRIFT

(45) Veröffentlichungstag der Patentschrift:
**20.10.82**

(51) Int. Cl.³: **B 65 H 17/20**, G 11 B 15/28

(21) Anmeldenummer: **78101257.0**

(22) Anmeldetag: **28.10.78**

(54) **Bandtransportvorrichtung, insbesondere Magnetbandtransport.**

(30) Priorität: **07.11.77 DE 2749735**
**17.11.77 US 852330**

(43) Veröffentlichungstag der Anmeldung:
**16.05.79 Patentblatt 79/10**

(45) Bekanntmachung des Hinweises auf die Patenterteilung:
**20.10.82 Patentblatt 82/42**

(84) Benannte Vertragsstaaten:
**BE CH DE FR GB LU NL SE**

(56) Entgegenhaltungen:
**DE-A-2 013 680**
**DE-A-2 107 326**
**DE-A-2 113 006**
**DE-A-2 536 067**
**DE-A-2 703 806**
**DE-B-1 574 495**
**US-A-3 593 945**
**US-A-3 802 644**

(73) Patentinhaber: **BASF Aktiengesellschaft,**
**Carl-Bosch-Strasse 38, D-6700 Ludwigshafen (DE)**

(72) Erfinder: **Schoettle, Klaus, Ladenburger Strasse 70,**
**D-6900 Heidelberg (DE)**
Erfinder: **Lewin, Helmut, Wormser Landstrasse 30,**
**D-6712 Bobenheim-Roxheim 2 (DE)**
Erfinder: **Hoffmann, Werner, Bannwasserstrasse 62,**
**D-6700 Ludwigshafen (DE)**
Erfinder: **Dobler, Peter, Wanderstrasse 61,**
**D-6700 Ludwigshafen (DE)**
Erfinder: **Gilniorz, Lothar, Carl-Bosch-Ring 24,**
**D-6710 Frankenthal (DE)**
Erfinder: **Kincel, Roger S., Newcomb Avenue 9851,**
**Whittler California 90603 (US)**

Bandtransportvorrichtung, insbesondere Magnetbandtransport

Die Erfindung betrifft eine Bandtransportvorrichtung, insbesondere einen Magnetbandtransport, mit einer Aufwickel- und einer Abwickelrolle und einer dazwischen angeordneten Antriebsrolle, wobei die Aufwickel- und Abwickelrollen auf beweglichen Rollenträgern gelagert und durch Federeinrichtungen an den Umfang der Antriebsrolle angedrückt werden und wobei den Rollenträgern eine Krafterzeugungseinrichtung bzw. je ein Massekörper zugeordnet sind.

Magnetbandgeräte sind beispielsweise als derartige, sogenannte Kontaktwickel-Bandtransportgeräte oder -Bandlaufwerke ausgebildet.

Eine Ausführung einer solchen Bandtransportvorrichtung ist in der US-Patentschrift 4023748 beschrieben, die ein Kassettenlade- und Bandzugserzeugungssystem betrifft. Die in dieser US-Patentschrift beschriebene Vorrichtung umfasst ein Paar einerseits schwenkbar gelagerter Trägerarme, die andererseits je eine drehbar gelagerte Bandrolle tragen. Mittels Federkraft werden die Rollen zur Herstellung eines Kontaktandrucks an eine Treibrolle angedrückt, wodurch das Magnetband von einer Rolle an einem Aufzeichnungs-/Wiedergabekopf vorbei zur anderen Rolle transportiert wird. Während dieses Transportvorgangs ändern sich die Rollendurchmesser entsprechend, und die Trägerarme gleichen diese Änderungen dadurch aus, dass sie eine Schwenkbewegung durchführen, um die äusserste Bandlage beider Rollen an der Treibrolle in Kontaktandruck zu halten.

Ein wichtiger Nachteil entsteht, wenn die in der US-Patentschrift beschriebene, dem heutigen Stand der Technik entsprechende Vorrichtung in tragbaren Geräten verwendet werden soll, z.B. in portablen Videobandaufzeichnungsgeräten, die Stössen und Erschütterungen ausgesetzt sind. Stoss- und Erschütterungskräfte verursachen unkontrollierbare Schwankungen in der Grösse der Kontaktandruckkraft, mit welcher die Rollen an die Treibrolle angedrückt werden, da dadurch störende Geschwindigkeitsänderungen des Bandes erzeugt werden, wenn es am Magnetkopf vorbeiläuft. Ausserdem können starke Stoss- und Erschütterungseinflüsse dazu führen, dass die Bandrollen völlig ausser Kontakt mit der Treibrolle geraten, was manchmal zur Verwicklung des Bandes und sogar zum Bandabriss führen kann. Störungen dieser Art ziehen in der Folge Aufnahme- und Wiedergabefehler oder Signalausfälle nach sich und können, wenn starke Beschleunigungskräfte auftreten, zu katastrophalen Betriebsstörungen führen. Diese bestehen z.B. im Herausspringen des Bandes oder der Bandrollen aus den Führungen und/oder den Halterungen und können den weiteren Gebrauch des Gerätes unmöglich machen.

Aus der DE-A-2703806 ist eine Bandtransporteinrichtung der skizzierten Art mit Differentialdruckkraftsystem bekannt. Darin dient eine Reibungsbremse mit oder ohne Zusatzfeder dazu, die Bewegung des Schwenkarms mit der Aufwickelspule zu erschweren, um dadurch eine grössere Andruckkraft zwischen der Antriebsrolle und Aufwickelspule zu erzeugen als zwischen der Antriebsrolle und der Abwickelspule, deren Schwenkarm solange ungebremst schwenkbar bleibt. Diese laufrichtungsabhängigkeit elektromagnetisch gesteuerte Bremseinrichtung dient lediglich zur Einstellung und Aufrechterhaltung der Differentialandruckkräfte, die gemäss vorliegender Erfindung ausdrücklich «im wesentlichen unverändert bleiben sollen».

Aus der US-A-3802644 ist ein Magnetbandlaufwerk mit Treibbandantrieb bekannt, bei dem die Bandrollen auf schwenkbaren Trägern relativ zum Treibband beweglich gelagert sind. Mittels einer starren Stange sind letztgenannte Träger kraftschlüssig verbunden, und jeder Träger ist mit je einem Ausgleichsgewicht versehen.

Ein Treibbandantrieb ist grundsätzlich verschieden von einem Kontaktwickelantrieb mit zentraler Antriebsrolle. Über die Verbindungsstange werden alle Änderungen im Andruck der einen Bandrolle unverändert und direkt auf die andere Bandrolle übertragen. Die Ausgleichsgewichte können nur für im Durchschnittsfall gleicher Bandrollendurchmesser von aussen auf den Transport wirkende Beschleunigungskräfte dimensioniert sein, da weder die Grösse der Gewichte noch ihre Lage auf den Schwenkträgern veränderbar sind. Trägheitskräfte können nur von der Bandrollenmasse unabhängig kompensiert werden. Ausserdem kann die Stange nicht geschwindigkeitsabhängig nur grosse Beschleunigungskräfte von einer Rolle auf die andere übertragen.

Mit der US-A-3593945 ist es ebenfalls bekannt, bei einem solchen Bandtransport die Differentialdruckkräfte über Seilzüge und Stellmotoren in Abhängigkeit von der Momentanstellung der Rollenträger einzustellen.

Mit der DE-B-1574495 ist ein Bandlaufwerk mit einer ersten Einrichtung zur Feststellung des Bandzuges und einer zweiten Einrichtung zur Steuerung des Schlupfes in der Antriebsverbindung zur Spulenantriebsscheibe in Abhängigkeit vom festgestellten Bandzug bekannt. Die Spulen sind über eine Stossdämpfervorrichtung im Dämpfungssinne derartig verbunden, dass bei der Umsteuerung oder beim Inbetriebsetzen oder Anhalten des Laufwerks die Bandspannung langsam erfolgt, so dass der Bandzug sich nicht sprunghaft ändert.

Die verschiedenen Typen bekannter Magnetbandgeräte besitzen Vorzugsrichtungen besonderer Stossempfindlichkeit. Mit der US-A-2869799 ist es bekannt, für eine Magnetbandkassette, in der die Bandspulen konzentrisch übereinander angeordnet sind, eine Stossdämpfervorrichtung zu verwenden, die Schlaufenbildung und Spannungsausbildung im Band verhindert, insbesondere im Falle von ruckartigen, schnellen Winkel-Beschleunigungen und Winkel-Verzögerungen der Bandrollen. Die Stossdämpfervorrichtung wirkt mittels Federkraft auf beide Bandspulen in der Weise, dass entsprechend der jeweiligen Trägheitsmomente derselben das Band gleichmässig belastet wird und Transportschwierigkeiten vermieden werden. Ein Hinweis auf eine Anwendung einer solchen Stossdämpfereinrichtung für einen anderen Zweck als den normalen, wenn auch kurzzeitig wechselnden, Bandtransport ist nicht gegeben und auch nicht nahegelegt. Überdies liegen bei Geräten zum Kontaktwickel-Bandtransport andere technische Gegebenheiten vor.

Es ist auch prinzipiell bekannt, die Gehäuse von stossempfindlichen Geräten aus stossabsorbierendem Material (z.B. aus Polyurethan-Integralschaum, Polystyrolschaum und/oder aus deren stossabsorbierenden Materialien) herzustellen oder zu umgeben. Diese Massnahmen haben den Nachteil eines zu grossen Raumbedarfs, wodurch sich ihre Anwendung für portable Geräte verbietet.

Zum andern ist es allgemein bekannt, stossempfindliche Geräte innerhalb ihres Gehäuses, insbesondere in Richtung ihrer besonderen Stossempfindlichkeit mittels Stossdämpfern, meist gummielastischen Halterungen, zu lagern, so dass auf das Gerät verringerte Beschleunigungen wirken gegenüber den auf das Gehäuse wirkenden.

Es ist Aufgabe der vorliegenden Erfindung, einen Kontaktwickel-Bandtransport, insbesondere ein tragbares Gerät, mit Einrichtungen zur Verhinderung von auf Schlag-, Stoss- und Schwingungseinwirkungen beruhenden Beschädigungen und Betriebsstörungen, besonders zur Vermeidung vom Abheben der Bandrollen von der Antriebsrolle und von dadurch hervorgerufener Schlaufenbildung, auszubilden, wobei die Einrichtungen mit wirtschaftlich vertretbarem Aufwand realisierbar sein sollen.

Die Aufgabe wird mit einer Bandtransportvorrichtung, insbesondere einem Magnetbandtransport, mit einer Aufwickel- und einer Abwickelrolle und einer dazwischen angeordneten Antriebsrolle, wobei die Aufwickel- und Abwickelrollen auf beweglichen Rollenträgern gelagert sind und durch Federeinrichtungen an den Umfang der Antriebsrolle angedrückt werden und wobei den Rollenträgern eine Krafterzeugungseinrichtung zugeordnet ist, erfindungsgemäss dadurch gelöst, dass die Krafterzeugungseinrichtung zwischen den Rollenträgern parallel oder in Reihe mit den Federeinrichtungen angeordnet und jedem der beiden Rollenträger zugeordnet, bei langsamen Relativbewegungen relativ unwirksam ist, bei schnellen Relativbewegungen jedoch in Abhängigkeit von der momentanen Masse der jeweiligen Aufwickel- oder Abwickelrolle eine Kraft erzeugt, die der auf die jeweilige Bandrolle ausgeübten Beschleunigungskraft entgegenwirkt, wobei die Andruckkräfte zwischen Antriebsrolle und Aufwickel- und Abwickelrolle im wesentlichen unverändert bleiben.

Dieselbe Aufgabe wird ebenfalls mit einer Bandtransportvorrichtung, insbesondere einem Magnetbandtransport, mit einer Aufwickel- und einer Abwickelrolle und einer dazwischen angeordneten Antriebsrolle, wobei die Aufwickel- und Abwickelrollen auf beweglichen Rollenträgern gelagert sind und durch Federeinrichtungen an den Umfang der Antriebsrolle angedrückt werden und wobei jedem Rollenträger ein Massekörper zugeordnet ist, erfindungsgemäss dadurch gelöst, dass zwischen Massekörper und zugehöriger Bandrolle eine Kraftverlagerungseinrichtung vorgesehen ist, durch die eine Verlagerung des Schwerpunkts der aus Bandrolle, Rollenträger und Massekörper gebildeten Einheit in dem Sinne erfolgt, dass die durch schnelle Relativbewegung auf die Bandrolle wirkenden Beschleunigungskräfte zumindest verkleinert werden, dass die Kraftverlagerungseinrichtung bei langsamen Relativbewegungen der Bandrollen jedoch relativ unwirksam ist, so dass die Andruckkräfte zwischen Antriebsrolle und Aufwickel- und Abwickelrolle im wesentlichen unverändert bleiben.

Dadurch werden auf Beschleunigungskräften beruhende Transportstörungen vermieden, wobei die maximale Andruckkraft der Rollen an die Antriebsrolle auf ein zulässiges Mass begrenzt wird. Dadurch wird die Bandspannung im für ein Funktionieren des Transports notwendigen Umfange aufrechthaltbar.

In der ersten erfindungsgemässen Lösung kann die Krafterzeugungseinrichtung zweckmässig eine Kolben-Zylidereinrichtung mit Druckmittel sein, wobei Kolben und Zylinder an je einem Rollenträger befestigt sind und derartig ausgebildet sind und das Druckmittel derartig gewählt ist, dass bei langsamen Relativbewegungen der Rollenträger eine geringe Widerstandskraft und bei schnellen Relativbewegungen eine grössere Widerstandskraft durch die Krafterzeugungseinrichtung erzeugt wird.

In weiterer Ausbildung kann der Kolben mit Ringnuten in Form einer Labyrinthdichtung ausgebildet sein.

Es kann auch zweckmässig sein, wenn die Kolben-Zylindereinrichtung ein Kunststoff-Druckmedium enthält, das bereits bei langsam wirksamen Kräften zu fliessen beginnt und das bei schneller Krafteinwirkung elastisch reagiert. Dadurch und/oder durch geeignete Wahl der Kolbenform und/oder der Toleranzen von Kolben und Zylinder ist die für jeden Bandtransport günstige Bewegungsdämpfungscharakteristik wählbar. Je nach der günstigsten Raumausnutzung kann die Krafterzeugungseinrichtung entweder parallel zu oder in Reihe mit den Andruckeinrichtungen angeordnet und insbesondere als Kolben-Zylindereinrichtung ausgebildet sein.

Weitere zweckmässige Ausbildungen der Erfindung werden darin gesehen, dass die Krafterzeugungseinrichtung eine elekromagnetische Seil-Roll-Vorrichtung ist, die beispielsweise aus einer drehbar gelagerten Seilrolle aus zumindest teilweise magnetisierbarem Material bestehen kann, die mindestens teilweise im Magnetfeld eines Elektromagneten gelagert ist. Praktisch kann die Rolle um den Plunger eines Tauchspulen-Elektromagneten drehbar und blockierbar angeordnet sein.

Ferner kann die Krafterzeugungseinrichtung auch eine Seil-Roll-Vorrichtung sein, bei der die Rolle hohl ausgebildet und mit Kunststoff mit entsprechenden Fliesseigenschaften gefüllt ist.

In der zweiten erfindungsgemässen Lösung wird bei einem Bandtransport mit schwenkbar gelagerten Rollenträgern mittels der Kraftverlagerungseinrichtung der Schwerpunkt der Einheit zumindest in die Nähe der Schwenkachse der Rollenträger verlagert. Dabei werden beide Träger automatisch mit Bezug auf ihre Schwenkachse im Gleichgewicht gehalten, d.h. ihre Masse, einschliesslich der Bandrolle, ist derart verteilt, dass Stoss-, Schlag- und Erschütterungskräfte auf den Träger als Drehmomentkräfte von im wesentlichen derselben Grösse, jedoch von entgegengesetzter Richtung, wirken. Der Kraftausgleich erfolgt über Massekörper, auch als Gegengewichte bezeichnet, die an jedem Träger vorgesehen und derart gelagert sind, dass sie den Träger und die zugehörige Bandrolle in Bezug auf ihre Schwenkachse austarieren. Es wird somit zwischen den Bandrollen und der Antriebsrolle eine gleichförmige Andruckkraft aufrechterhalten, auch dann, wenn die Vorrichtung starken Stoss-, Schlag- und Erschütterungskräften ausgesetzt ist. Durch die Schwerpunktsverlagerung, die über eine Schwenkachsenverlagerung der Rollenträger erreicht wird, wird ständig die Änderung der Durchmesser der Bandrollen ausgeglichen.

In praktischer Ausführung des Bandtransports ist ein Chassis vorgesehen, an dem die Rollenträger bewegbar angebracht sind, und zwischen Chassis und jedem Rollenträger ist als Kraftverlagerungseinrichtung eine Schaukeleinrichtung vorgesehen, deren Teile relativ zueinander bewegbar gelagert sind.

Ferner wird die Schwenkachsenverlagerung durch eine Schaukeleinrichtung erreicht, die im wesentlichen aus zwei Teilen besteht, von denen der eine Teil auf dem Chassis und der andere Teil auf einem Rollenträger angeordnet ist und die Teile zumindest in einem linienförmigen Kontakt stehen.

Die Kontaktstelle ist erfindungsgemäss in einem Bereich von nahe der Bandrolle bis nahe dem Massekörper ortsveränderlich. Zweckmässig sind die Teile der Schaukeleinrichtung schlupfverhindernd ausgebildet und besitzen insbesondere eine Verzahnung. Praktisch können die Teile als Zylindersegmente ausgebildet sein und über die Zylindermantelfläche als Kontaktflächen miteinander in Berührung stehen.

Ferner kann zwischen den Lagern der Teile der Schaukeleinrichtung mindestens ein Zugglied vorgesehen sein, womit eine Vorspannkraft für einen ständigen gegenseitigen Kontakt der Teile aufrechterhaltbar ist.

In weiterer Ausbildung können die Massekörper der Rollenträger Gegengewichte sein, mittels der die Rollenträger relativ zu ihrer Schwenkachse ausbalancierbar sind, und es können Einrichtungen zur Verschiebung der Schwenkachsen vorgesehen sein, mittels der bei Massenänderung der Bandrollen die Schwenkachse der Rollenträger zum Schwerpunkt der aus Bandrolle, Rollenträger und Gegengewichten gebildeten Einheit verschiebbar ist, so dass auf die Schwenkachse wirkende Drehmomente zumindest verringerbar sind.

Auf diese Weise lässt sich ein genauer Gewichtsabgleich der Träger erreichen, ungeachtet der Tatsache, dass die Rollenmasse sich während des Betriebs der Bandtransportvorrichtung ständig ändert.

Eine Verschiebung der Schwenkachse oder in der Draufsicht gesehen des Schwerpunktes wird durch die mit jedem Träger verbundene Schaukeleinrichtung bewirkt. Jede dieser Schaukeleinrichtungen umfasst einen am Chassis angebrachten Auflageblock und einen am Träger angebrachten, z.B. kufenförmigen, Schaukelblock. Sowohl der Auflageblock als auch der Schaukelblock können mit Schaukelkontaktflächen versehen sein, die einander ständig berühren.

Zumindest eine der beiden Schaukelkontaktflächen kann dabei gekrümmt sein, so dass die Schaukelfläche des Auflageblocks aufliegend schaukeln kann, d.h. die Schaukelkontaktflächen stehen miteinander in Wälzkontakt. Die momentane Schwenkachse des Trägers, d.h. der Punkt, in dem sich die beiden Schaukelflächen berühren, kann daher stufenlos verändert werden.

Im Betrieb bewirkt eine Durchmesseränderung einer Bandrolle eine Verschiebung des Rollenkerns und daher des Trägerendes, das die Rolle trägt, gegenüber der Antriebsrolle. Diese Verschiebung des Trägers wird dadurch ausgeglichen, dass der Schaukelblock auf dem Auflageblock automatisch die Schaukelbewegung ausführt, wodurch die Schwenkachse verschoben wird, so dass sowohl Änderungen der Rollenmasse und als auch des Rollendurchmessers automatisch ausgeglichen werden. Damit werden die vorgegebenen Kontaktandruckkräfte, die bei diesem Transporttyp aufrechterhalten werden müssen, sichergestellt, auch im Falle von beliebigen Beschleunigungskräften.

Die Erfindung ist mit besonderem Erfolg auch einsetzbar für Kontaktwickel-Bandgeräte für die Aufzeichnung und/oder Wiedergabe von Videosignalen und besonders von Farbvideosignalen. Es wird durch die raumsparende und einfache Ausbildung der stosskompensierenden Einrichtungen auch möglich, ein solches Gerät in stark verkleinerter Form in eine Videokamera als sogenannten Kamera-Rekorder einzubauen. Es ist weiterhin vorteilhaft, dass die praktischen Ausführungen mit einem geringen Bedarf von elektrischer Energie betreibbar sind.

Bei einer derartigen Rekorder-Kamera wird der Kontaktwickel-Bandtransport im wesentlichen gebildet durch zwei Magnetbandrollen, die als Aufwickel- bzw. als Abwickelrolle auf bewegbaren Schlitten oder Schwenkarmen angeordnet sind und die etwa einander gegenüberliegend an eine gemeinsame Antriebsrolle angedrückt werden. Solche Geräte haben eine Vorzugsrichtung der Stossempfindlichkeit in einer gemeinsamen, gedachten Ebene, die durch die drei vertikalen Drehachsen der zwei Bandrollen und der Antriebsrolle gebildet wird. Wirkt ein Stoss in dieser Ebene radial zu den Bandrollen, so werden alle Laufwerksteile in Richtung des Stosses beschleunigt. Die Massenträgheit der beweglichen Schwenkarme mit den Bandwickeln wirkt dem Stoss entgegen, derart, dass der in Stossrichtung hinter der Antriebsrolle gelegene Bandwickel an diese (während der Stosswirkung) stärker und der davor liegende Bandwickel schwächer an die Antriebsrolle angedrückt wird. Ist das Massenträgheitsmoment des davorliegenden Bandwickels z.B. dadurch gross, dass zum Stosszeitpunkt sich der ganze Bandvorrat weitgehend auf dieser Bandrolle befindet, so kann bei entsprechender Stossstärke die Kraft der die Schwenkarme verbindenden Andruckfeder überwunden werden und die betreffende Bandrolle von der Antriebsrolle abheben. Dies führt ohne die erfindungsgemässe Lösung in der Regel zu einer ernsthaften Betriebsstörung, wenn die durch Stosswirkung abhebende Bandrolle gleichzeitig gerade die Aufwickelrolle ist. Durch das Abheben wird der Antrieb der betreffenden Bandrolle kurzzeitig unterbrochen, das von der Abwickelrolle beschleunigt abgegebene Band kann dann nicht mehr aufgenommen werden und das Band springt aus der Bandführung, so dass das Band auch nach dem Ende der Stosswirkung unkontrolliert weitertransportiert wird, bis das Gerät abgeschaltet wird oder sich durch Verwickeln des Bandes selbst blockiert.

Durch die beiden Lösungen der vorliegenden Erfindung werden bei Stosseinwirkung auf das Gerät zweckmässig die Rollenträger, insbesondere die Schwenkarme in ihrer gegenseitigen Lage selbsttätig derartig form- und/oder kraftschlüssig miteinander verbunden oder durch Massekörper und Schwenkachsenverlagerung ausbalanciert, dass ein Abheben einer oder beider Bandrollen von der Antriebsrolle ausgeschlossen wird. Dadurch werden die Bandrollen als wichtigste durch Beschleunigungskräfte betroffene Geräteteile von deren Einflüssen freigehalten, und die Andruckkräfte zwischen Bandrollen und Antriebsrolle, die in einem bestimmten Verhältnis zueinander stehen müssen, werden nicht beeinflusst.

Ausführungsbeispiele des erfindungsgemässen Bandtransports sind in der folgenden Beschreibung und den dazugehörigen Zeichnungen beschrieben und erläutert.

In der Zeichnung zeigen:

Figur 1: ein Laufwerk mit Antriebsrolle, Magnetband, Zugfeder und Schwenkarm, zwischen denen die stosskompensierende Krafterzeugungseinrichtung angebracht ist.

Figur 2: eine Kombination von Zugfeder und Krafterzeugungseinrichtung mit einem Flüssigkeits-Stossdämpfer.

Figur 3: wie Figur 2, mit einem Kunststoff-Stossdämpfer.

Figur 4: eine Krafterzeugungseinrichtung mit Feder, Verlängerungsseil, Seilrolle und magnetischer Feststelleinrichtung für die Seilrolle.

Figur 4a: wie Figur 4, mit einer Tauchspule und einer als Plunger wirkenden Achse für die Seilrolle.

Figur 5: wie Figur 4, mit einer Seilrolle mit Ringkammer für eine Kunststoff-Füllung.

Figur 6: eine Draufsicht auf den Boden der Ringkammer von Figur 5 im Ausschnitt.

Figur 7: eine vereinfachte perspektivische Darstellung einer Bandtransportvorrichtung gemäss vorliegender Erfindung.

Figur 8: eine Draufsicht der Vorrichtung der Fig. 7, in der Teile der Bandrollen weggelassen wurden, um die Schwingeinheiten freizulegen.

Figur 9: eine vergrösserte Teildarstellung einer Schaukeleinheit im Schnitt entlang der Linie 3–3 der Fig. 8, aus der das Ineingriffkommen der Schaukelkontaktflächen hervorgeht.

Figur 10: eine Draufsicht eines Kopplungsteils, das die Schaukelkontaktflächen in gegenseitiger Berührung hält.

Figur 11: eine perspektivische Darstellung des Kopplungsteils der Fig. 10 in aufgebogenem Zustand.

Figur 12: eine vergrösserte perspektivische Darstellung einer der Schaukeleinheiten der Fig. 8.

Figur 13: in vergrösserter Darstellung die Drehachse eines Trägers mit aufgesetzter Bandrolle, im Schnitt entlang der Linie 7–7 in Fig. 7.

Figur 14: eine perspektivische Darstellung eines anderen Ausführungsbeispiels einer Schaukeleinheit, und

Figur 15: eine vergrösserte Teildarstellung der Schaukeleinheit der Figur 14 entlang der Linie 9–9 aus Fig. 14.

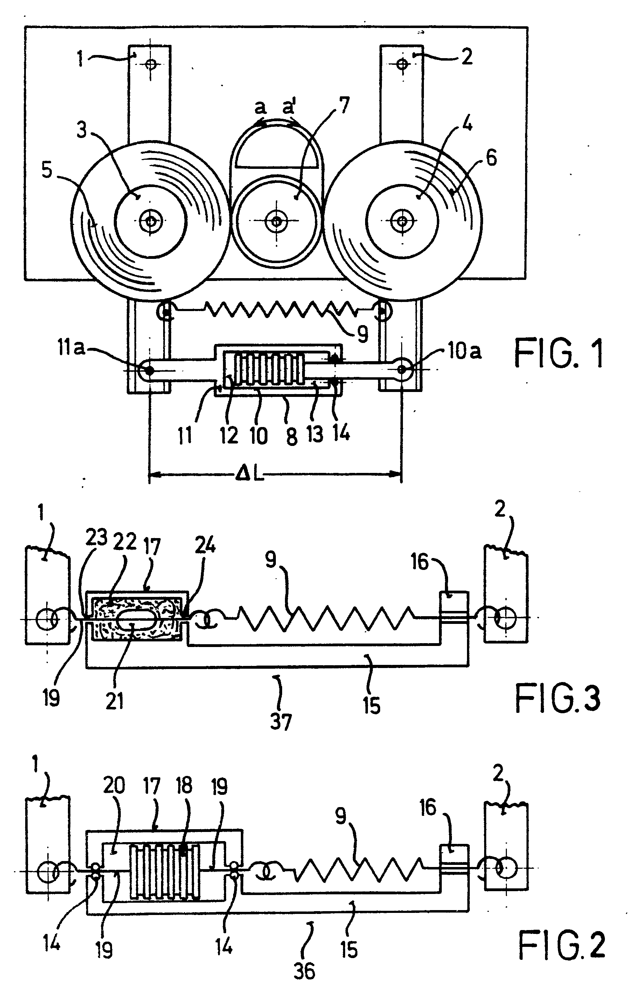

Figur 1 zeigt als Bandtransport ein Kontaktwikkellaufwerk mit zwei Schwenkarmen 1 und 2, den beiden drehbar gelagerten Rollenkernen 3 und 4 mit den Bandrollen 5 und 6, der Feder 9 als Andruckeinrichtung und die erfindungsgemässe stossdämpfende Krafterzeugungseinrichtung 8. Die Feder 9 zieht die Schwenkarme 1 und 2 zusammen, wodurch die Bandrollen 5 und 6 an der Umfangsfläche gegen die zentrale, mit einer elastischen Auflage versehene Antriebsrolle 7 angedrückt werden. Die Krafterzeugungseinrichtung 8 ist mit ihren beiden Endteilen an den Schwenkarmen 1 und 2 an den Stellen 10a und 11a schwenkbar angebracht, also parallel zur Feder 9 angeordnet. Zum Ausgleich der durch die sich ändernden Bandrollendurchmesser hervorgerufenen Änderung des Abstandes zwischen den Stellen 10a und 11a besteht die Krafterzeugungseinrichtung 8 im wesentlichen aus zwei Hauptteilen, einem Zylinder 11 und einem Kolben 10, die gegeneinander verschieblich sind. Der vom Kolben 10 nicht ausgefüllte Zylinderraum ist mit einem nicht kompressiblen Medium (Druckmittel) gefüllt, das bei langsamer Änderung des Abstandes $\Delta L$ mit geringem Widerstand von der Zylinderkammer 12 zur Zylinderkammer 13 fliesst bzw. umgekehrt, je nachdem ob sich der Abstand $\Delta L$ verkleinert bzw. vergrössert. Der Kolben 10 ist z.B. in seinem Durchmesser etwas kleiner gewählt als der Zylinderinnendurchmesser und bei Verwendung von leicht fliessendem Füllmedium wie z.B. handelsüblichen Hydraulikölen an seiner Oberfläche mit Ringnuten, einer sogenannten Labyrinthdichtung, versehen. Grundsätzlich kann der Kolben auch den Zylinderquerschnitt abdichtend ausgebildet sein, in diesem Fall müsste ein Bypass für das Druckmittel vorgesehen sein. Damit keine Flüssigkeit aus der Zylinderkammer 13 austritt, ist der Durchgang der Kolbenstange durch das Zylindergehäuse mit einer Dichtung 14 versehen. Zum Schutz gegen Knicken bei Druckbelastungen (kleiner werdendem ΔL)beträgt die Länge des Kolbens 10 vorzugsweise das 0,5- bis 0,9-fache Länge des Zylinderinnenraumes.

Bei langsamen, allmählichen Kolbenbewegungen, wie sie sich beim normalen Betrieb des Magnetbandes durch Abspulen von der Abwickelrolle 5 auf die Aufwickelrolle 6 ergeben, wird in der Kammer 12 in der Zeiteinheit eine nur sehr geringe Menge Flüssigkeit verdrängt, die schon bei geringem Druckgefälle über die Labyrinthdichtung des Kolbens 10 oder einen Bypass in die Kammer 13 fliessen kann oder umgekehrt.

Bei einem Stoss jedoch, durch den normalerweise z.B. die Aufwickelrolle 6 von der Antriebsrolle 7 oder dem Kapstan kurzzeitig abgehoben würde, wird letzteres dadurch verhindert, dass während der sehr kurzen Stossdauer nur äusserst wenig Flüssigkeit von der Kammer 13 in die Kammer 12 fliesst und dadurch eine nennenswerte Verlängerung des Abstandes ΔL während des Stosses nicht gestattet.

Selbstverständlich sind auch andere, nicht dargestellte, aus der Hydrauliktechnik, bekannte Stossdämpferausführungen, wie z.B. ein Kolben mit Lochblende oder der oben bereits erwähnte Zylinderbypass anwendbar.

Figur 2 zeigt eine vorteilhafte und raumsparende Kombination der Feder 9 mit einer Verriegelungseinrichtung 36 in Reihenanordnung. Das Zylindergehäuse 17 z.B. mit einer Ölfüllung 20 ist auf der einen Seite eines U-förmigen Rahmens 15 angebracht, mit dessen anderem Schenkel 16 die Feder 9 fest verbunden ist. Das aus dem Schenkel 16 herausragende Feder-Ende der Feder 9 oder der Schenkel 16 selbst ist mit dem Schwenkarm 2 drehbar verbunden. Das andere Ende der Feder 9 ist mit der durch das Zylindergehäuse 17 beidseitig hindurchreichenden Kolbenstange 19 an der der Feder zugewandten Seite verbunden. Das andere Ende der Kolbenstange 19 ist in den Schwenkarm 1 drehbar eingehängt. Die Durchgänge der Kolbenstange 19 durch das Zylindergehäuse 17 sind mit Dichtungen 14 gegen Flüssigkeitsaustritt abgedichtet.

Durch diese Anordnung wird erreicht, dass die Federkraft im Normalbetrieb über langsame Bewegungen des Kolbens 17 wie gewünscht auf die Schwenkarme 1 und 2 wirkt, bei Stosseinwirkung sich aber über Kolben 16, Zylinder 17 und Rahmen 15 eine formschlüssige Verbindung der beiden Schwenkarme 1 und 2 ergibt, die sich nach Stossende selbständig wieder löst.

Figur 3 zeigt eine ähnliche Anordnung wie Figur 2 mit einer Verriegelungseinrichtung 37, die jedoch eine Kunststoff-Füllung 22 anstelle der Ölfüllung im Zylindergehäuse 17 und einen den Fliesseigenschaften der Kunststoff-Füllung 22 entsprechend angepassten Kolben 21 aufweist. Als Füllung 22 kommen alle Kunststoffe in Frage, die schon bei geringsten aber langsam einwirkenden Belastungen zu fliessen beginnen, bei schneller Einwirkung (Wirkzeit < 0,1 sec) jedoch, auch bei grössten Kräften fast nur elastisch reagieren; z.B. unvernetztes Homopolybutadien, in einer vorteilhaften Mischung aus 10% 1,2 Vinylpolybutadien, 35% Cu-Polybutadien und 55% 1.4 trans-Polybutadien. Solche Materialien sind so zähflüssig, dass sich besondere Abdichtungen des Zylindergehäuses 17 an den Stellen 23 und 24 erübrigen. Zur Ermöglichung des langsamen Materialstromes von der einen Kolbenseite zur anderen ist der Kolben 21 an den Kanten abgerundet und in seinem Durchmesser nur etwa halb so gross gewählt wie der Innendurchmesser des Zylinders 17.

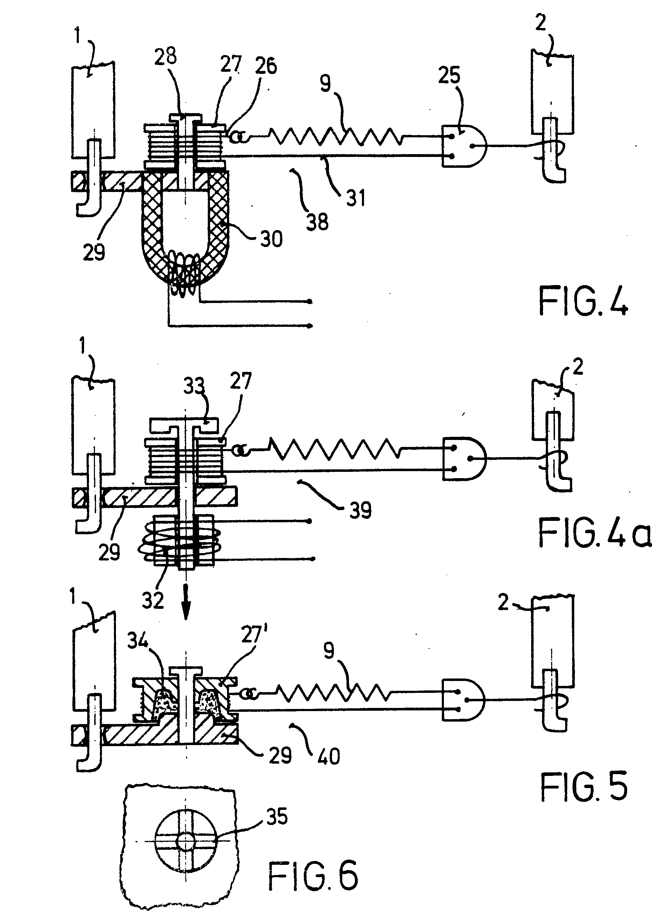

Figur 4 zeigt eine weitere vorteilhafte Ausgestaltung der Erfindung mit einer mit der Feder 9 kombinierten Verriegelungseinrichtung 38 wiederum in Reihenanordnung. Dabei ist die Feder 9 mit ihrem einen Ende über ein Verbindungsteil 25 oder direkt mit dem Schwenkarm 2 beweglich verbunden, das andere Ende der Feder 9 ist in die Öse eines Seils 26 z.B. einer flexiblen Schnur, eines Stahldrahts oder eines Kunststoffadens eingehängt. Das Seil 26 umschlingt die Rolle 27 mindestens 0,5 bis 3,5 mal, vorzugsweise 1,5 mal, und wird dann zum Verbindungsteil 25 oder zum Schwenkarm 2 zurückgeführt und dort befestigt. Die Rolle 27 ist mit einem Achsstift 28 auf dem Halter 29 drehbar gelagert. Der Halter 29 ist mit dem Schwenkarm 1 beweglich verbunden. An dem Halter 29 ist ein Elektromagnet, z.B. in Hufeisenform, derartig befestigt, dass, wenn die Windungen des Magnets die aus magnetisierbarem Metall, vorzugsweise aus weichmagnetischem Metall, z.B. kohlenstoffarmen Stahl, bestehende Rolle 27 anzieht und an einer weiteren Drehbewegung hindert, wodurch, solange das Magnetfeld wirkt, eine weitere Dehnung der Feder ausgeschlossen ist, da sich durch die Umschlingung der durch die Magnetfeldwirkung feststehenden Rolle 27 über den Seilteil 31 eine formschlüssige Verriegelung der beiden Schwenkarme 1 und 2 im jeweiligen Abstand gegen eine Vergrösserung des Abstandes ΔL ergibt. Durch ein stossempfindliches, nicht dargestelltes Sensorglied, z.B. einen Piezokristall, kann zweckmässig das Magnetfeld nur während eines Stosses eingeschaltet werden.

Figur 4a zeigt eine ähnliche Anordnung wie Figur 4, wobei eine Verriegelungseinrichtung 38 aus einer Tauchspule 32 und einer als Plunger 33 ausgebildeten Rollenachse besteht. Bei durch die Spule 32 fliessendem Strom wird der Plunger 33 durch das entstehende Magnetfeld im Spulenkern in Pfeilrichtung nach unten gezogen und klemmt somit die Rolle 27 fest zwischen dem tellerförmigen Ansatz des Plungers 33 und dem Halter 29 ein.

Somit ist die Rolle 27 an einer Drehbewegung blockiert.

Wie in Figur 5 und 6 gezeigt, kann die Kraftwirkung der magnetischen Halterung der in Figur 4 und 4a beschriebenen Rolle 27 auch durch eine, wie in der Ausführung in Figur 3 verwendete Kunststoff-Füllung als Druckmedium erzeugt werden. Dazu ist die Rolle 27' der Einrichtung 40 mit einem, z.B. ringförmigen, Hohlraum 34 versehen, der völlig mit dem Kunststoff gefüllt ist. Somit werden langsame Drehungen der Rolle 27' durch Fliessen des Kunststoffes erlaubt. Im Stossfall wird die Rolle 27' durch die Reibung des Kunststoffes an den Wandungen des ringförmigen Hohlraumes 34 gegen Drehen blockiert und somit die Schwenkarme 1 und 2 gegeneinander verriegelt. Zur Erhöhung der Reibung des Kunststoffes innerhalb des Hohlraumes 34 können, wie in Figur 6 gezeigt, am Boden der Halterung 29 und im Hohlraum 34 der Rolle 27' z.B. radiale Nuten angebracht werden, die ein leichtes Gleiten des Kunststoffes an den Wandungen verhindern.

In den vorliegenden Ausführungsbeispielen der Erfindung wird ausgenutzt, dass bei entsprechender Geräteauslegung der Abstand zwischen den beiden Bandrollenachsen bei einem vollen Durchlauf des Magnetbandes von der einen zur anderen Seite sich nur geringfügig ändert. Bei einem praktisch ausgeführten Gerät mit einem Antriebsrollendurchmesser von 20mm, Rollenkerndurchmesser von 30mm, einer Bandlänge von ca. 180m und einer Banddicke von $8,5 \times 10^{-3}$mm beträgt die Distanzänderung max. 1,6mm und ist dann am grössten, wenn sich auf beiden Bandrollen gleichviel Band befindet.

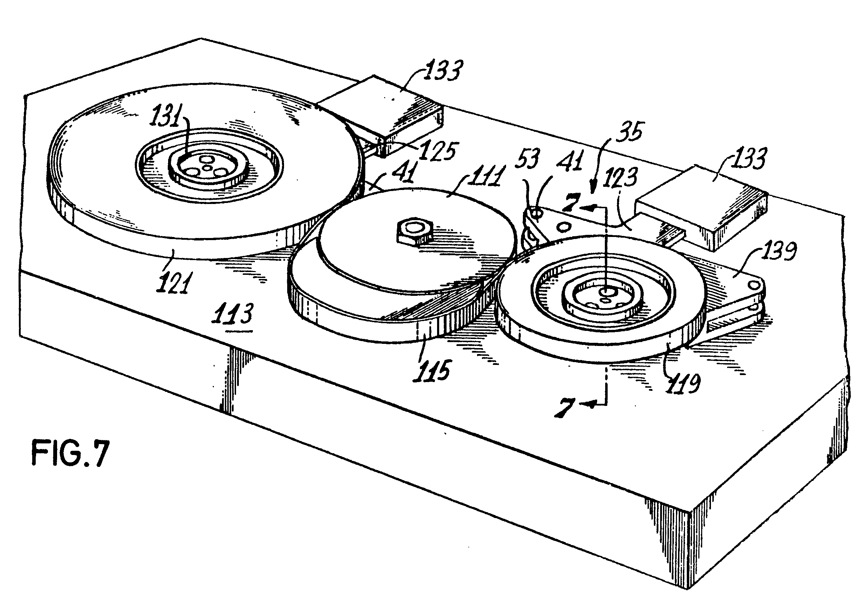

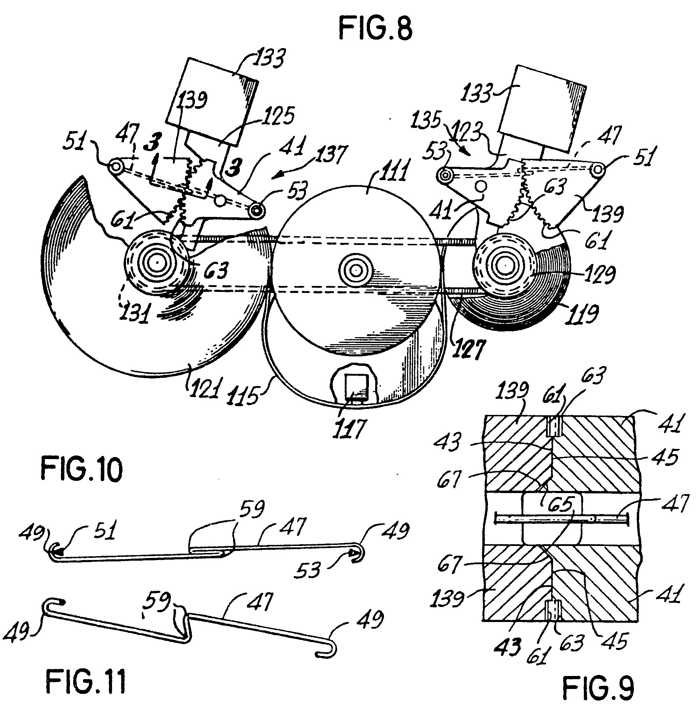

Figur 7 und 8 zeigen ein Magnetbandtransportsystem, umfassend eine zylinderförmige Antriebsrolle 111, die auf einem Chassis 113 drehbar gelagert ist und die ein Magnetband 115 am Aufzeichnungs-/Wiedergabemagnetkopf 117 vorbeiführt. Eine Abwickelrolle 119 und eine Aufwickelrolle 121, die in derselben Ebene wie die Antriebsrolle angeordnet sind, werden durch Oberflächenkontaktandruck zwischen der äussersten Magnetbandlage jeder Bandrolle und dem elastischen Umfangsrand der Antriebsrolle angetrieben.

Die Abwickelrolle 119 ist auf einem ersten Schwenkarmträger 123 und die Aufwickelrolle 121 auf einem zweiten Schwenkarmträger 125 drehbar gelagert. Die drehbar gelagerten Bandrollen 119 und 121 werden über eine strumpfbandartige Feder 127, welche die jeweiligen Träger an Seilscheibenteilen 129 und 131 miteinander verbindet, an die Antriebsrolle 111 angedrückt, wodurch der Kontaktandruck aufgebracht wird. Die beiden Träger 123 und 125 sind auf dem Chassis 113 schwenkbar gelagert. Es ist klar, dass während des Transports des Bandes 115 von der Abwickelrolle 119 am Aufzeichnungs-/Wiedergabekopf 117 vorbei zur Aufwickelrolle 121 die Durchmesser der Bandrollen sich ändern. Die Träger 123 und 124 gleichen diese Rollendurchmessänderungen dadurch aus, dass sie in ihren jeweiligen Schwenklagern frei schwenken, wobei sich die Rollenkerne entweder in Richtung auf die Antriebsrolle 111 oder von der Antriebsrolle 111 weg bewegen, wodurch der Kontaktandruck zwischen Bandrollen und Antriebsrolle aufrechterhalten wird.

Erfindungsgemäss ist sowohl am ersten als auch am zweiten Träger 123 bzw. 125 jeweils ein Gegengewicht 133 vorgesehen, um das Gewicht der Bandrollen 119 bzw. 121 auszugleichen. Auf diese Art werden die Träger bezüglich ihrer jeweiligen Schwenkachsen ausbalanciert und ein einheitlicher Kontaktandruck zwischen Bandrollen 119 und 121 und Antriebsrolle 111 wird aufrechterhalten, sogar dann, wenn die Vorrichtung Stoss-, Schlag- oder Erschütterungskräften in beliebiger Richtung ausgesetzt ist.

Zur Erzielung einer maximalen stoss- und erschütterungsdämpfenden Wirkung ist es wünschenswert, dass der Ort des Schwerpunktes jedes Trägers stets mit dem Schwerpunkt der gesamten Trägereinheit zusammenfällt, wobei letztere den Träger, die zugehörige Bandrolle und das zugehörige Gegengewicht umfasst. Da sich die Masse jeder Bandrolle im Betrieb der Vorrichtung ständig ändert, verschiebt sich auch fortwährend der Schwerpunkt der Trägereinheit. Vorteilhafte Resultate werden dann erzielt, wenn der Schwerpunkt stets mit dem Schwerpunkt der Einheit zusammenfällt. Beide Träger 123 und 125 sind auf dem Chassis 113 Kraftverlagerungseinrichtungen, die als Schaukeleinheiten 135 bzw. 137 ausgebildet sind montiert. Jede dieser Schaukeleinheiten bewirkt, dass der Schwerpunkt der zugehörigen Trägereinheit den Schwerpunkt der Einheit genau genug «verfolgt», um gegen Stoss, Schlag und Erschütterung ausreichende Dämpfung zu erzielen.

Jede der Schaukeleinheiten 135 und 137 ergibt einen Schwerpunkt für den zugehörigen Träger 123 bzw. 125, der automatisch entlang eines Kurvenweges, der Ortslinie möglicher Schwerpunkte, verschiebbar ist, während sich der zugehörige Rollendurchmesser ändert. Bei kleinstem Bandrollendurchmesser, d.h. dann, wenn die Rollen 119 bzw. 121 ihre kleinste Masse aufweisen, hat sich der Schwerpunkt automatisch bis zu einem Punkt bewegt, der dem Gegengewicht 133 am nächsten liegt und vom Rollenkern am weitesten entfernt ist. Ebenso gilt, dass bei maximalen Bandrollendurchmesser, d.h. dann, wenn die Rolle ihre grösste Masse aufweist, der Schwerpunkt automatisch an einen Punkt rückt, der dem Rollenkern am nächsten liegt und vom Gegengewicht am weitesten entfernt ist.

Die Träger 123 und 125 mit ihren Bandrollen 119 und 121 und den Gegengewichten 133 werden also dauernd austariert oder ausgewogen, während die Bandrollen auf- bzw. abgewickelt werden. Wirken Stoss- oder Erschütterungskräfte auf die Transportvorrichtung, werden keine Drehmomentkräfte auf die Träger übertragen, so dass der Kontaktandruck zwischen den Bandrollen 119, 121 und der Antriebsrolle 111 im wesentlichen nicht beeinflusst wird. Es wird also im wesentlichen konstanter Bandzug und eine konstante Bandtransportgeschwindigkeit aufrechterhalten.

Wie aus Fig. 8 hervorgeht, umfasst jede der Schaukeleinheiten 135 bzw. 137 einen Auflageblock 139, der am Chassis 113 befestigt ist, einen Schaukelblock 41, der am zugehörigen Träger 123 bzw. 125 befestigt ist, sowie Einrichtungen zur gegenseitigen Kopplung der beiden Blöcke 139 und 41. Der Auflageblock 139 besitzt eine kufenförmige Wälzfläche 43, während der Schaukelblock eine entsprechende kufenförmige Schaukelkontaktfläche 45 besitzt, die so ausgebildet ist, dass sie auf der Wälzfläche 42 des Auflageblocks bequem abrollen kann.

Im vorliegenden Fall bilden die beiden Schaukelkontaktflächen oder Kufenflächen 43 und 45 Segmente von Zylindern mit im wesentlichen gleichen Radien. Sie liegen aneinander an, derart, dass ihre Schwenkachsen in beiden Fällen parallel zu den Rotationsachsen der Bandrollen 119 und 121 verlaufen. Der Schaukelblock 41 kann daher auf dem Auflageblock 139 in einer Ebene schwingen, die sich parallel zu derjenigen der Antriebsrolle 111 und der Bandrolle 119 und 121 erstreckt.

Die jeweilige Stelle, an der die beiden Kufenflächen 43 und 45 in Eingriff kommen, dient als Schwerpunkt für die zugehörigen Träger 123 bzw. 125. Während sich der Durchmesser der zugehörigen Bandrollen 119 bzw. 121 von seinem grössten bis zu seinem kleinsten Mass verändert, verschiebt sich der Bandrollenkern unter dem Einfluss der Feder 127 automatisch relativ zur Antriebsrolle 111. Diese Bewegung bewirkt, dass der Schaukelblock 41 auf dem Auflageblock 139 abrollt, wodurch die Berührungsstelle der Wälzflächen zwischen dem der jeweiligen Bandrolle nächstgelegenen Flächenende und den dem Gegengewicht 133 nächstgelegenen Flächenende variiert.

In einem zweckmässigen Ausführungsbeispiel der Erfindung umfasst der Kopplungsteil für den Schaukelblock 41 und den Auflageblock 139 ein Zugglied in Form eines Kabels 47. Diese Kopplung verhindert das Abheben des Schaukelblocks vom Auflageblock, gestattet jedoch eine Schaukelbewegung auf der jeweiligen anderen Wälzfläche. Wie Fig. 10 zeigt, besitzt das Kabel 47 Haken 49 an beiden Enden. Einer dieser Haken 49 wird um einen Chassiszapfen 51 gelegt, der im Mittelpunkt der Krümmung der Wälzfläche 43 des Auflageblocks gelegen ist, während der andere Haken um einen Zapfen 53 am Träger herumgelegt wird, der auf einem seitlichen Fortsatz des Trägers 123 bzw. 125 vorgesehen ist, und zwar im Mittelpunkt der Krümmung der Wälzfläche 45 des Schaukelblocks. Das Kabel 47 erstreckt sich durch Kopplungsschlitze 55 und 57 hindurch, die im Auflageblock 139 bzw. im Schaukelblock 41 vorgesehen sind.

Gemäss Fig. 11 wird der Zusammenbau der Schaukeleinheiten 135 und 137 dadurch erleichtert, dass das Mittelstück des Kabels 47 ursprünglich derart ausgebildet ist, dass es eine S-Form aufweist, deren einzelne Biegung einen Winkel von etwa 135° besitzt. Nachdem die Endhaken 49 des Kabels 47 um die Zapfen 51 bzw. 53 gelegt sind, wird die S-Form zusammengeklappt, so dass eine gestreckte 180°-Biegung entsteht. Dadurch wird die effektive Länge des Kabels 47 verkürzt und dennoch die Kopplung zwischen Schaukelblock 139 und Auflageblock 41 über Vorspannung erreicht, wodurch ein Abheben der beiden Wälzflächen voneinander sicher verhindert wird.

In einer anderen Ausführung wird die Verbindung zwischen dem Schaukelblock 139 und dem Auflageblock 41 mit einer Schraubenfeder hergestellt, die an jedem Ende einen Haken zur Umschlingung der jeweiligen Zapfen 51 und 53 besitzt. Die Spannung dieser Zugfeder muss ausreichen, um sicherzustellen, dass weder Stoss- noch Erschütterungskräfte die beiden Wälzflächen voneinander abheben können.

Es ist zu beachten, dass die hier beschriebene Schaukelbewegung auch mittels Abrollflächen erzielt werden kann, die zahlreiche Krümmungen aufweisen, die sich von den Kufenflächen der Zylindersegmente mit gleichem Radius des beschriebenen Ausführungsbeispiels unterscheiden. Tatsächlich lassen sich die Träger 123 und 125 noch genauer ausbalancieren, wenn die Wälzfläche 45 des Schaukelblocks überhaupt keine Krümmung aufweist. Wie jedoch aus nachfolgender Beschreibung hervorgeht, lässt sich ein wichtiger Vorteil dann erzielen, wenn die im obigen Ausführungsbeispiel beschriebenen Wälzflächen, also ein Paar Kufenflächen von Zylindersegmenten mit gleichem Radius, verwendet werden.

Einer der Vorteile, die mit den zylindermantelförmigen Wälzflächen erzielbar sind, ist, dass die Schaukeleinheit in dieser Form der Schaukelbewegung der Träger 123 und 125 nur minimalen Widerstand entgegensetzt. Da die Zapfen 51 und 53, zwischen denen das Kabel 47 gespannt ist, jeweils an den Krümmungsmittelpunkten der Abrollflächen angeordnet sind, ist die vom Kabel erzeugte Kraft stets auf die Berührungsstelle der Wälzflächen ausgerichtet. Demzufolge kann auf den Träger von der Schaukeleinheit her kein Drehmoment einwirken, während der Träger seinen gesamten Bewegungsbereich durchschwenkt, und die aufgrund von Reibung der Schaukelbewegung entgegenwirkende Widerstandskraft ist vernachlässigbar klein. Da diese Widerstandskraft so geringfügig ist, lässt sich die Andrückkraft zwischen den Bandrollen 119 bzw. 121 und der Antriebsrolle 111 gleichmässig aufrechterhalten.

Eine weitere Verminderung der Widerstandskraft, den die Schaukeleinheit der Schaukelbewegung des Trägers 123 bzw. 125 entgegensetzt, wird dadurch erreicht, dass die Zapfen 51 und 53 mit Schneiden (Fig. 10) zur Abstützung der Haken 49 an den Enden des Kabels 47 versehen werden. Auf diese Weise können die Haken um die Zapfen schwenken, statt an ihnen entlangzugleiten, wodurch die Reibung reduziert und die Widerstandskraft der Schaukeleinheit gegen die vom Träger verursachte Schaukelbewegung entsprechend stärker reduziert wird.

In einem wichtigen Merkmal der Erfindung umfasst jede der Schaukeleinheiten 123 und 125 ausserdem Einrichtungen, die einen relativen Schlupf zwischen den jeweiligen Schaukelkontaktflächen 43 und 45 verhindern.

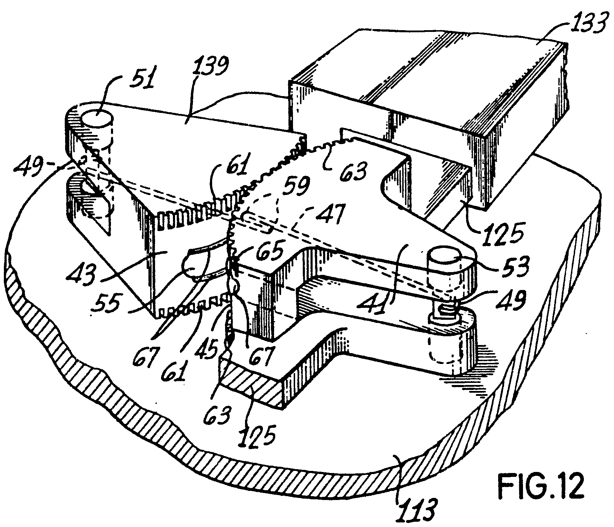

Wie Fig. 12 zeigt, wird eine relative Gleitbewegung der Schaukelflächen in einer Richtung parallel zu der Ebene, in der sich die Träger 123 und 125 bewegen, vermieden durch ein Paar Auflageblock-Zahnsegmente 61 und ein Paar Schaukelblock-Zahnsegmente 63. Die Zahnsegmente sind gekrümmt, wobei der Krümmungsradius derselbe ist wie derjenige der Abwälzfläche 43 des Auflageblocks, und sind am Auflageblock 139 entlang der Kanten seiner Wälzflächen vorgesehen. Die Zahnsegmente des Schaukelblocks sind ebenfalls gekrümmt und erstrecken sich am Schaukelblock 41 entlang der Kanten seiner Wälzfläche 45.

Jedes Zahnsegment 61 kommt in Eingriff mit dem entsprechenden Zahnsegment 63, wodurch jede Gleitbewegung des Schaukelblocks 41 relativ zum Auflageblock 139 in einer Richtung, die zur Bewegungsebene des Trägers parallel ist, verhindert wird. Ausserdem verhindert der Eingriff der Zahnsegmente jegliche Schaukelbewegung des Trägers um die Achse des Kabels 47, welches den Schaukelblock mit dem Auflageblock verbindet. Andererseits verhindert der Eingriff der Zahnsegmente keineswegs die normale, betriebsmässige Schaukelbewegung des Schaukelblocks auf dem Auflageblock.

Eine relative Gleitbewegung der Wälzfläche entlang einer Achse, die zu der Ebene, in der der Träger 123 bzw. 125 bewegt wird, senkrecht steht (d.h. parallel zur Rotationsachse der Bandrollen), wird durch eine Nut- und Federanordnung verhindert. Diese Anordnung umfasst ein Paar abgekröpfte Federn 65, die sich der Wälzfläche 45 des Schaukelblocks entlang erstrecken, nahe dem Kupplungsschlitz 57, und ein Paar entsprechend geformter Nuten 67, die sich ähnlich entlang der Wälzfläche 43 des Auflageblocks in der Nähe der Kanten seines Kupplungsschlitzes 55 erstrecken.

Jede der Federn 65 kommt mit der entsprechenden Nut 67 in Eingriff, um eine relative Gleitbewegung zwischen den Wälzflächen 43 und 45 in Richtungen, die zur Ebene der Schaukelbewegung des Träger senkrecht stehen, zu verhindern. Die oberen Abschnitte der Federn kommen vorzugsweise mit den unteren Abschnitten der entsprechenden Nuten nicht in Eingriff, so dass im wesentlichen die gesamte Andruckkraft zwischen Schaukelblock 41 und Auflageblock 139 auf die entsprechenden Wälzflächen wirken kann.

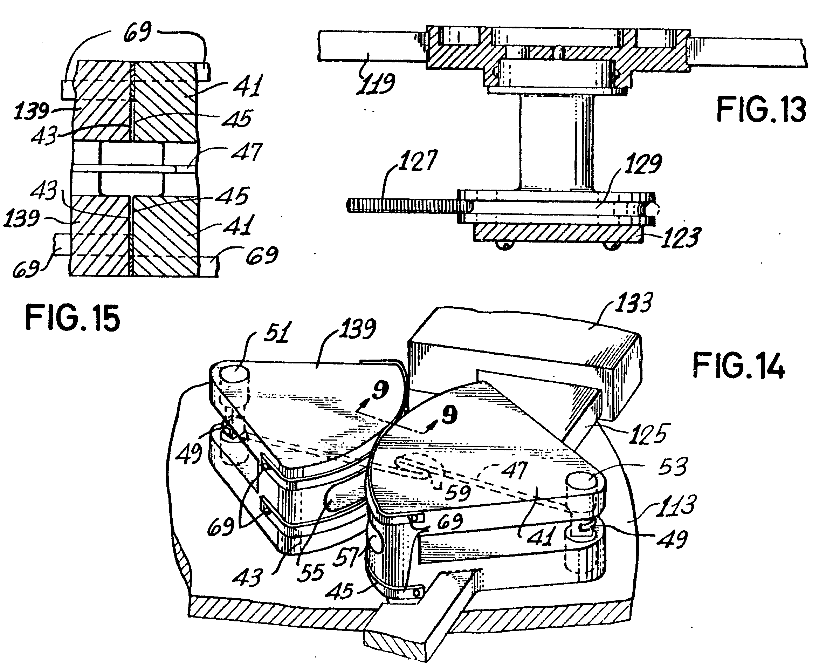

Die Figuren 14 und 15 zeigen eine andere Ausführungsform der Schaukeleinheit 135 bzw. 137, wobei relative Gleitbewegungen in irgendeiner Richtung über vier Koppelbänder 69 verhindert werden, welche den Auflageblock 139 mit dem Schaukelblock 41 verbinden. Diese Bänder sind im Querschnitt dünn genug, um sich bei Gebrauch leicht biegen zu lassen, sind jedoch verhältnismässig steif in Längsrichtung und können aus Federstahl oder einem ähnlichen Material bestehen. Zwei dieser Bänder erstrecken sich parallel entlang der Wälzfläche 43 des Auflageblocks, und zwar von dem dem Gegengewicht 133 nächstgelegenen Ende bis zu der Stelle, an der die beiden Wälzflächen in Kontakt stehen, und weiter entlang der Wälzfläche 45 des Schaukelblocks bis zu derem vom Gegengewicht am weitesten entfernten Ende. Ähnlich erstrecken sich die anderen beiden Bänder parallel entlang der Wälzfläche 45 des Schaukelblocks, von dem dem Gegengewicht nächstgelegenen Ende zur Berührungsstelle der beiden Wälzflächen, und weiter entlang der Wälzfläche 43 des Auflageblocks, bis zum vom Gegengewicht am weitesten entfernten Ende. Die beiden Enden jedes Bandes sind am Auflageblock 139 und am Schaukelblock 41 an Stellen befestigt, die ausserhalb der jeweiligen Wälzflächen liegen.

Die hier beschriebene Anordnung von Koppelbändern 69 gestattet eine Bewegung des Schaukelblocks 41 gegenüber dem Auflageblock 139 nur so lange wie der Abstand zwischen den jeweiligen Enden jedes Bandes sich nicht vergrössert. Diese Einschränkung begrenzt die Relativbewegung auf die hier beschriebene Schaukelbewegung und schliesst alle anderen Formen der Relativbewegung aus.

Durch entsprechende Anpassung sind die Beispiele der erfindungsgemässen Einrichtungen auch bei Kontaktwickel-Bandtransporten mit Schlitten als Rollenträgern für die Erreichung derselben Vorteile anwendbar.

Es wurde ein mit Schwenkarmen ausgebildetes Bandlaufwerk mit Einrichtungen der beschriebenen Art in der Praxis erprobt und optimiert, dass es einen Stoss entsprechend einer momentanen Beschleunigung von 40–50g ohne Störungen und Beschädigungen überstehen kann.

Aus obiger Beschreibung ergibt sich, dass die Erfindung eine einfache, aber effektive Einrichtung zur Anpassung eines Bandtransportsystems an den erfolgreichen Betrieb mit tragbaren Geräten gestattet, bei dem die Vorrichtung starken Stoss- und Vibrationseinflüssen ausgesetzt sein kann. Obwohl die Erfindung hier im einzelnen unter Bezugnahme auf bestimmte Ausführungsbeispiele beschrieben wurde, sind für den Fachmann auf diesem Gebiet verschiedene Abänderungen des Erfindungsgegenstandes ohne weiteres möglich. Dementsprechend wird ein Patentschutz für alle von den Patentansprüchen abgedeckten Ausführungen der Erfindung beansprucht.

## Patentansprüche

1. Bandtransportvorrichtung, insbesondere Magnetbandtransport, mit einer Aufwickel- und einer Abwickelrolle (5 und 6) und einer dazwischen angeordneten Antriebsrolle (7), wobei die Aufwickel- und Abwickelrollen auf beweglichen Rollenträgern (1 und 2) gelagert sind und durch Federeinrichtungen (9) an den Umfang der Antriebsrolle (7) angedrückt werden und wobei den Rollenträgern eine Krafterzeugungseinrichtung zugeordnet ist, dadurch gekennzeichnet, dass die Krafterzeugungseinrichtung (8, 36 bis 40) zwischen den Rollenträgern (1 und 2) parallel (Fig. 1) oder in Reihe (Fig. 2 bis 5) mit den Federeinrichtungen (9) angeordnet und jedem der beiden Rollenträger (1 und 2) zugeordnet bei langsamen Relativbewegungen relativ unwirksam ist, bei schnellen Relativbewegungen jedoch in Abhängigkeit von der momentanen Masse der jeweiligen Aufwickel- oder Abwickelrolle (5 oder 6) eine Kraft erzeugt, die der auf die jeweilige Bandrolle (5 bzw. 6) ausgeübten Beschleunigungskraft entgegenwirkt, wobei die Andruckkräfte zwischen Antriebsrolle (7) und Aufwickel- und Abwickelrolle (5 und 6) im wesentlichen unverändert bleiben.

2. Bandtransportvorrichtung, insbesondere Magnetbandtransport, mit einer Aufwickel- und einer Abwickelrolle (121 und 119) und einer dazwischen angeordneten Antriebsrolle (111), wobei die Aufwickel- und Abwickelrollen auf beweglichen Rollenträgern (125 bzw. 123) gelagert sind und durch Federeinrichtungen (127) an den Umfang der Antriebsrolle (7) angedrückt werden, und wobei jedem Rollenträger ein Massekörper (133) zugeordnet ist, dadurch gekennzeichnet, dass zwischen Massekörper (133) und zugehöriger Bandrolle (121 bzw. 119) eine Kraftverlagerungseinrichtung (135 bzw. 137) vorgesehen ist, durch die eine Verlagerung des Schwerpunkts der aus Bandrolle, Rollenträger und Massekörper gebildeten Einheit (121, 125 und 133 bzw. 119, 123 und 133) in dem Sinne erfolgt, dass sie durch schnelle Relativbewegung auf die Bandrolle (121 bzw. 119) wirkenden Beschleunigungskräfte zumindest verkleinert werden, dass die Kraftverlagerungseinrichtung (135 bzw. 137) bei langsamen Relativbewegungen der Bandrollen (121 und 119) jedoch relativ unwirksam ist, so dass die Andruckkräfte zwischen Antriebsrolle (111) und Aufwickel- und Abwickelrolle (121 bzw. 119) im wesentlichen unverändert bleiben.

3. Bandtransport nach Anspruch 2, dadurch gekennzeichnet, dass bei schwenkbar gelagerten Rollenträgern (123, 125) mittels der Kraftverlagerungseinrichtung (135, 137) der Schwerpunkt der Einheit zumindest in die Nähe der Schwenkachse verlagerbar ist.

4. Bandtransport nach Anspruch 1, dadurch gekennzeichnet, dass die Krafterzeugungseinrichtung (8) eine Kolben-Zylindereinrichtung (10, 11) mit Druckmittel ist, wobei Kolben (10) und Zylinder (11) an je einem Rollenträger (1 bzw. 2) befestigt sind und derartig ausgebildet sind und das Druckmittel derartig gewählt ist, dass bei langsamen Relativbewegungen der Rollenträger (1 und 2) eine geringe Widerstandskraft und bei schnellen Relativbewegungen eine grössere Widerstandskraft durch die Krafterzeugungseinrichtung (8) erzeugt wird.

5. Transport nach Anspruch 4, dadurch gekennzeichnet, dass der Kolben (10) mit Ringnuten in Form einer Labyrinthdichtung ausgebildet ist.

6. Bandtransport nach Anspruch 4, dadurch gekennzeichnet, dass die Kolben-Zylindereinrichtung (37) ein Kunststoff-Druckmedium (22) enthält, das bereits bei langsam wirksamen Kräften zu fliessen beginnt und das bei schneller Krafteinwirkung elastisch reagiert.

7. Bandtransport nach Anspruch 1, dadurch gekennzeichnet, dass die Krafterzeugungseinrichtung (40) eine elektromagnetische Seil-Rollen-Vorrichtung (38 bzw. 39) ist.

8. Bandtransport nach Anspruch 7, dadurch gekennzeichnet, dass die Seil-Rollen-Vorrichtung (38 bzw. 39) aus einer drehbar gelagerten Seilrolle (27) besteht, die zumindest teilweise aus magnetisierbarem Metall besteht, und die mindestens teilweise im Magnetfeld eines Elektromagneten (30 bzw. 32) gelagert ist.

9. Bandtransport nach Anspruch 7, dadurch gekennzeichnet, dass eine aus magnetisierbarem Metall bestehende Rolle (27) um den Plunger (33) einer Tauchspulen-Elektromagnetanordnung (32) drehbar und blockierbar gelagert ist.

10. Bandtransport nach Anspruch 1, dadurch gekennzeichnet, dass die Krafterzeugungseinrichtung (40) eine Seil-Rollen-Vorrichtung ist, die aus einer zumindest teilweise hohlen Rolle (27') mit einer Füllung aus Kunststoff (34), dessen Fliesseigenschaft zwar ein langsames Drehen der Rolle (27'), ein schnelles Drehen jedoch nicht zulässt, besteht.

11. Bandtransport nach Anspruch 2 oder 3, dadurch gekennzeichnet, dass ein Chassis (113) vorgesehen ist, an dem die Rollenträger (123, 125) bewegbar angebracht sind und dass zwischen Chassis (113) und jedem Rollenträger (123 bzw. 125) als Kraftverlagerungseinrichtung eine Schaukeleinrichtung (137 bzw. 135) vorgesehen ist, deren Teile relativ zueinander bewegbar sind.

12. Bandtransport nach Anspruch 11, dadurch gekennzeichnet, dass die Schaukeleinrichtung (137, 135) im wesentlichen aus zwei Teilen besteht, von denen der eine Teil (139) auf dem Chassis (113) und der andere Teil (41) auf einem Rollenträger (123 bzw. 125) angeordnet ist und die Teile (139 und 41) zumindest in einem linienförmigen Kontakt stehen.

13. Bandtransport nach Anspruch 12, dadurch gekennzeichnet, dass die Kontaktstelle der beiden Teile in einem Bereich von nahe der Bandrolle (121 bzw. 119) bis nahe dem Massekörper (133) ortsveränderlich ist.

14. Bandtransport nach einem oder mehreren der Ansprüche 1, 11 bis 13, dadurch gekennzeichnet, dass die Teile (139, 41) in ihrem Kontaktbereich eine schlupfverhindernde Ausbildung aufweisen und insbesondere eine Verzahnung (61 bzw. 63) besitzen.

15. Bandtransport nach Ansprüchen 12 bis 14, dadurch gekennzeichnet, dass die Teile (139 und 41) eine Zylindersegmentform besitzen und über Zylindermantelflächen (43 bzw. 45) als Kontaktflächen miteinander in Berührung stehen.

16. Bandtransport nach Ansprüchen 12 bis 15, dadurch gekennzeichnet, dass zwischen den Lagern der Teile (139, 41) der Schaukeleinrichtung mindestens ein Zugglied (47) vorgesehen ist, womit eine Vorspannungskraft für einen ständigen gegenseitigen Kontakt der Teile aufrechterhaltbar ist.

17. Bandtransport nach Ansprüchen 2 und 3 und einem oder mehreren der Ansprüche 11 bis 16, dadurch gekennzeichnet, dass die Massekörper (133) der Rollenträger Gegengewichte sind, mittels der die Rollenträger (123, 125) relativ zu ihrer Schwenkachse ausbalancierbar sind, und Einrichtungen zur Verschiebung der Schwenkachsen vorgesehen sind, mittels der bei Masseänderung der Bandrollen (121, 119) die Schwenkpunkt der aus Bandrolle (121 oder 119), Rollenträger (123 bzw. 125) und Gegengewichten (133) räger (123 bzw. 125) und Gegengewichten (133) gebildeten Einheit verschiebbar ist, so dass auf die Schwenkachse wirkende Drehmomente zumindest verringerbar sind.

## Claims

1. A tape transport apparatus, especially a magnetic tape transport, having a take-up and a supply reel (5 and 6) and a capstan (7) arranged therebetween, the take-up and supply reels being mounted on movable reel carriers (1 and 2) and being urged by spring means (9) against the periphery of the capstan (7), and a force-producing device being allocated to the reel carriers, characterized in that the force-producing device (8, 36–40), arranged between the reel carriers (1 and 2) parallel to (Fig. 1), or in series with (Figs. 2 to 5), the spring means (9), and allocated to each of the two reel carriers (1 and 2), is relatively ineffective in the case of slow relative movements, but in the case of fast relative movements produces, depending on the momentary mass of the take-up or supply reel (5 or 6), a force which counteracts the accelerative force exerted on the tape reel concerned (5 or 6), the compressive forces between the capstan (7) and the take-up and supply reels (5 and 6) remaining substantially unchanged.

2. A tape transport apparatus, especially a magnetic tape transport, having a take-up reel and a supply reel (121 and 119) and a capstan (111) arranged therebetween, the take-up and supply reels being mounted on movable reel carriers (125 and 123) and being urged by spring means (127) against the periphery of the capstan (7), and a mass body (133) being allocated to each reel carrier, characterized in that there is provided between the mass body (133) and the associated tape reel (121, 119) a force-shifting device (135, 137) by means of which the centre of mass of the assembly formed by the tape reel, reel carrier mass-body (121, 125 and 133; 123 and 133) is so shifted that the accelerative forces acting on the tape reel (121, 119) as a result of fast relative movements are at least reduced, but that in the case of slow relative movements of the tape reels (121 ans 119) the force-shifting device (135, 137) is relatively ineffective, so that the compressive forces between the capstan (111) and the take-up and supply reels (121 and 119) remain substantially unchanged.

3. A tape transport apparatus as claimed in claim 2, characterized in that in the case of pivotally mounted reel carriers (123, 125) the centre of mass of the assembly can be shifted by means of the force-shifting device (135, 137) at least close to the pivot axis.

4. A tape transport apparatus as claimed in claim 1, characterized in that the force-producing device (8) is a piston/cylinder assembly (10, 11) containing a pressure medium, the piston (10) and the cylinder (11) being respectively connected to reel carriers (1 and 2) and being so designed and the pressure medium being so chosen that in the case of slow relative movements of the reel carriers (1 and 2) a low resisting force and in the case of rapid relative movements a higher resisting force is produced by the force-producing device (8).

5. A transport apparatus as claimed in claim 4, characterized in that the piston (10) is provided with annular grooves in the form of a labyrinth gasket.

6. A tape transport apparatus as claimed in claim 4, characterized in that the piston/cylinder assembly (37) contains a synthetic pressure medium (22) which flows readily under the influence of slow-acting forces but which responds elastically under the influence of fast-acting forces.

7. A tape transport apparatus as claimed in claim 1, characterized in that the force producing device (40) is an electromagnetic rope/drum device (38 and 39).

8. A tape transport apparatus as claimed in claim 7, characterized in that the rope/drum device (38 and 39) comprises a rotatably mounted drum (27) which is made at least partially of magnetizable metal and is at least partially situated within the magnetic field of an electromagnet (30, 32).

9. A tape transport apparatus as claimed in claim 7, characterized in that a drum (27) of magnetizable metal is rotatably ans seizably mounted around the plunger (33) of a solenoid (32).

10. A tape transport apparatus as claimed in claim 1, characterized in that the force-producing device (40) is a rope/drum device comprising an at least partially hollow drum (27') filled with a synthetic material (34) whose flow properties permit slow rotation of the drum (27') but prevent fast rotation thereof.

11. A tape transport apparatus as claimed in claim 2 or 3, characterized in that a chassis (133) is provided on which the reel carriers (123, 125) are movably mounted, and that a rocker assembly (137, 135) is arranged as force-shifting device between the chassis (113) and each reel carrier (123, 125), the parts of which assembly are movably mounted relative to one another.

12. A tape transport apparatus as claimed in claim 11, characterized in that the rocker assembly (137, 135) consists essentially of two parts, one part (138) being situated on the chassis (133) and the other part (41) on a reel carrier (123, 125), and the parts (139 and 41) being at least in linear contact with one another.

13. A tape transport apparatus as claimed in claim 12, characterized in that the location of the point of contact of the two parts can be varied within a range from near the tape reel (121, 119) to near the mass body (133).

14. A tape transport apparatus as claimed in one or more of claims 1 and 11 to 13, characterized in that the parts (139, 41), in their zone of contact, have a slip-preventing shape and in particular interlocking teeth (61, 63).

15. A tape transport apparatus as claimed in claims 12 to 14, characterized in that the parts (139 and 41) have the shape of a cylinder segment and are in contact with one another via cylindrical peripheral surfaces (42, 45) as contact surfaces.

16. A tape transport apparatus as claimed in claims 12 to 15, characterized in that between the bearings of the parts (139, 41) of the rocker assembly there is provided at least one tension means (47) with which a biassing force, ensuring continuous contact between the parts, can be maintained.

17. A tape transport apparatus as claimed in claims 2 and 3 and one or more of claims 11 to 16, characterized in that the mass bodies (133) on the reel carriers are counterweights by means of which the reel carriers can be balanced about their pivot axes, and means for moving the pivot axes are provided with the aid of which, when there is a change in the mass of each tape reel (121, 119), the pivot axis of the reel carrier (123, 125) is shifted to the centre of mass of the assembly formed by the tape reel (121, 119), reel carrier (123, 125) and counterweight (133), so that torques acting on the pivot can be at least reduced.

## Revendications

1. Dispositif de transport de bande, en particulier de bande magnétique, comportant une bobine réceptrice et une bobine débitrice (5 et 6) et un galet d'entraînement (7) placé entre elles, les bobines réceptrice et débitrice étant montées sur des supports mobiles (1 et 2) et appliquées par des moyens élastiques (9) contre le pourtour de galet d'entraînement (7), un moyen générateur de force étant associé aux supports de bobines, caractérisé par le fait que le moyen générateur de force (8, 36 à 40) est monté entre les supports de bobines (1 et 2) en parallèle (fig. 1) ou en série (fig. 2 à 5) avec les moyens élastiques (9) et, adjoint à chacun des deux supports de bobines (1 et 2), est relativement inopérant lors des mouvements relatifs lents mais, lors des mouvements relatifs rapides, produit, en fonction de la masse instantanée de la bobine réceptrice ou débitrice (5 ou 6), une force qui s'oppose à la force d'accélération exercée sur la bobine de bande (5 ou 6), les forces d'application entre le galet d'entraînement (7) et les bobines réceptrice et débitrice (5 et 6) restant à peu près constantes.

2. Dispositif de transport de bande, en particulier de bande magnétique, comportant une bobine réceptrice et une bobine débitrice (121 et 119) et un galet d'entraînement (111) placé entre eux, les bobines réceptrice et débitrice étant montées sur des supports mobiles (125 et 123) et appliquées par des moyens élastiques (127) contre le pourtour du galet d'entraînement (7), et à chaque support de bobine étant adjointe une masse (133), caractérisé par le fait qu'entre la masse (133) et la bobine de bande associée (121 ou 119) est prévu un moyen de déplacement de force (135 ou 137) grâce auquel le centre de gravité de l'ensemble formé de la bobine de bande, du support de bobine et de la masse (121, 125 et 133 ou 119, 123 et 133) est déplacé dans un sens tel que les forces d'accélération agissant sur la bobine de bande (121 ou 119), par mouvement relatif rapide, sont au moins réduites, mais que le moyen de déplacement de force (135 ou 137) est relativement inopérant lors des mouvements relatifs lents des bobines de bande (121 et 119), de sorte que les forces d'application entre le galet d'entraînement (111) et les bobines réceptrice et débitrice (121 et 119) restent à peu près constantes.

3. Dispositif de transport de bande selon la revendication 2, caractérisé par le fait que, les supports de bobines (123, 125) étant montées pivotants, le moyen de déplacement de force (135, 137) permet de déplacer le centre de gravité de l'ensemble au moins jusqu'à proximité de l'axe de pivotement.

4. Dispositif de transport de bande selon la revendication 1, caractérisé par le fait que le moyen générateur de force (8) est un vérin (10, 11) contenant un agent transmetteur de pression, le piston (10) et le cylindre (11) de ce vérin étant fixés chacun respectivement à un support de bobine (1 ou 2) et étant agencés et l'agent transmetteur de pression choisi de façon que le moyen générateur de force (8) produise une faible résistance lors des mouvements relatifs lents des supports de bobine (1 et 2) et une grande résistance lors de leurs mouvements relatifs rapides.

5. Dispositif de transport de bande selon la revendication 4, caractérisé par le fait que le piston (10) est pourvu de gorges circonférentielles qui forment un joint à labyrinthe.

6. Dispositif de transport de bande selon la revendication 4, caractérisé par le fait que le vérin (37) contient un agent transmetteur de pression constitué de matière plastique (22) qui commence déjà à s'écouler sous des forces agissant lentement et réagit élastiquement en cas d'action rapide de force.

7. Dispositif de transport de bande selon la revendication 1, caractérisé par le fait que le moyen générateur de force (40) est un moyen électromagnétique à corde et poulie (38 ou 39).

8. Dispositif de transport de bande selon la revendication 7, caractérisé par le fait que le moyen à corde et poulie (38 ou 39) est constitué d'une poulie (27) montée rotative qui est au moins en partie dans le champ magnétique d'un électroaimant (30 ou 32).

9. Dispositif de transport de bande selon la revendication 7, caractérisé par le fait que la poulie (27) en métal magnétisable est montée rotative et blocable autour du plongeur (33) d'un dispositif électromagnétique à bobine (32).

10. Dispositif de transport de bande selon la revendication 1, caractérisé par le fait que le moyen générateur de force (40) est un moyen à corde et poulie constitué d'une poulie (27') au moins en partie creuse remplie de matière plastique (34) dont la plasticité permet une rotation lente de la poulie (27') mais non sa rotation rapide.

11. Dispositif de transport de bande selon l'une des revendications 2 et 3, caractérisé par le fait qu'il est prévu un châssis (113) sur lequel les supports de bobines (123, 125) sont montés mobiles et qu'entre ce châssis (113) et chaque support de bobine (123 ou 125) est prévu, comme moyen de déplacement de force, un moyen oscillant (137 ou 135) dont les éléments sont mobiles l'un par rapport à l'autre.

12. Dispositif de transport de bande selon la revendication 11, caractérisé par le fait que le moyen oscillant (137, 135) est constitué essentiellement de deux éléments dont l'un (139) est monté sur le châssis (113) et l'autre (41) monté sur un support de bobine (123 ou 125) et ces éléments (139 et 41) sont au moins en contact linéaire.

13. Dispositif de transport de bande selon la revendication 12, caractérisé par le fait que le lieu de contact des deux éléments est mobile dans une zone allant de la proximité de la bobine de bande (121 ou 119) à la proximité de la masse (133).

14. Dispositif de transport de bande selon l'une ou plusieurs des revendications 1 et 11 à 13, caractérisé par le fait que les éléments (139, 41), dans leur zone de contact, ont une forme empêchant le glissement et en particulier comportent une denture (61 ou 63).

15. Dispositif de transport de bande selon l'une des revendications 12 à 14, caractérisé par le fait que les éléments ont la forme d'un segment de cylindre et sont en contact par les surfaces latérales (43 ou 45) des cylindres.

16. Dispositif de transport de bande selon l'une des revendications 12 à 15, caractérisé par le fait qu'entre les paliers des éléments (139, 41) du moyen oscillant, est prévu au moins un élément de traction (47) qui permet de maintenir une précontrainte pour assurer un contact mutuel permanent des éléments.

17. Dispositif de transport de bande selon l'une des revendications 2 et 3 et l'une ou plusieurs des revendications 11 à 16, caractérisé par le fait que les masses (133) des supports de bobines sont des contrepoids au moyen desquels les supports de bobines (123, 125) peuvent être équilibrés relativement à leur axe de pivotement, et qu'il est prévu des moyens de déplacement des axes de pivotement grâce ausquells, lors du changement de masse des bobines de bande (121, 119), l'axe de pivotement des supports de bobines (123, 125) est déplaçable par rapport au centre de gravité de l'ensemble formé de la bobine de bande (121 ou 119), du support de bobine (123 ou 125) et des contrepoids (133), de sorte que les couples agissant sur l'axe de pivotement peuvent au moins être réduits.

FIG. 1

FIG.3

FIG.2

FIG.4

FIG.4a

FIG.5

FIG.6

FIG.7

# FIG.8

# FIG.10

# FIG.11

# FIG.9

FIG.12

FIG.13

FIG.15

FIG.14